(19) **Europäisches Patentamt**
**European Patent Office**
**Office européen des brevets**

(11) **EP 4 664 210 A1**

(12) **EUROPEAN PATENT APPLICATION**
published in accordance with Art. 153(4) EPC

(43) Date of publication:
**17.12.2025 Bulletin 2025/51**

(21) Application number: **23921373.9**

(22) Date of filing: **21.12.2023**

(51) International Patent Classification (IPC):
**G05B 13/04** (2006.01)  **G05B 11/36** (2006.01)
**G05B 13/02** (2006.01)  **H02P 29/00** (2016.01)

(52) Cooperative Patent Classification (CPC):
**G05B 11/36; G05B 13/02; G05B 13/04; H02P 29/00**

(86) International application number:
**PCT/JP2023/046011**

(87) International publication number:
**WO 2024/166555 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.02.2023 JP 2023017892**

(71) Applicant: **Panasonic Intellectual Property
Management Co., Ltd.
Kadoma-shi, Osaka 571-0057 (JP)**

(72) Inventors:
• **KINOSHITA Yusuke
Kadoma-shi, Osaka 571-0057 (JP)**
• **NAKAZAWA Satoshi
Kadoma-shi, Osaka 571-0057 (JP)**

(74) Representative: **Novagraaf International SA
Chemin de l'Echo 3
1213 Onex, Geneva (CH)**

(54) **CONTROL SYSTEM, CONTROL METHOD, AND PROGRAM**

(57)  Disclosed herein is a technique for improving practicality in terms of a model predictive control function and a disturbance suppression function. A disturbance estimator (2) estimates, based on a first manipulative variable and a controlled variable, a disturbance for a control target (Ob1) which outputs a controlled variable according to the first manipulative variable, and outputs an estimation signal including an amount of disturbance. A model predictive controller (3) calculates a second manipulative variable based on the controlled variable to output a control signal including the second manipulative variable. A modifier (4) modifies the second manipulative variable by reference to modification information based on the amount of disturbance and thereby provides the output signal including the first manipulative variable as the second manipulative variable thus modified. The model predictive controller (3) includes one or more first processors. The disturbance estimator (2) includes one or more second processors. The model predictive controller (3) outputs the control signal in a first output cycle. The disturbance estimator (2) outputs the estimation signal in a second output cycle. The modifier (4) provides the output signal in a third output cycle. The second output cycle and the third output cycle are both shorter than the first output cycle.

FIG. 1

EP 4 664 210 A1

## Description

## Technical Field

The present disclosure generally relates to a control system, a control method, and a program. More particularly, the present disclosure relates to a control system having a model predictive control function, a control method, and a program.

## Background Art

Patent Literature 1 discloses a control system including: a multiple input/output plant (as a control target); and a controller for predicting, using a model predictive control function, the behavior of the multiple input/output plant when some disturbance is caused thereto and thereby controlling the disturbance. The controller includes a controlled variable predictive error calculator, a disturbance estimator, and a disturbance suppressor. The controlled variable predictive error calculator calculates a controlled variable predictive error as the difference between a controlled variable predictive value calculated by the model predictive control function and a controlled variable signal output by the multiple input/output plant. The disturbance estimator calculates a disturbance estimated value based on a step response end value acquired in advance by the model predictive control function and the controlled variable predictive error calculated by the controlled variable predictive error calculator. The disturbance suppressor modifies, based on the disturbance estimated value calculated by the disturbance estimator, a manipulative variable calculated by the model predictive control function to output a modified manipulative variable. The technique of Patent Literature 1 may improve the disturbance suppression function even when the model predictive control is applied to the multiple input/output plant. The control system of Patent Literature 1 is implementable at a low cost with the computational complexity reduced significantly. In addition, the control system of Patent Literature 1 may also be configured to rely on only the results of a step response test, even without deviating from the constraint on the manipulative variable according to the model predictive control.

## Citation List

## Patent Literature

Patent Literature 1: JP 2010-204784 A

## Summary of Invention

Nevertheless, if the amount of calculation of the model predictive control is larger than the amount of calculation of the disturbance estimator, causing a delay to the processing by the disturbance estimator in synch with the model predictive control would cause a decline in the function of removing, or at least suppressing, the disturbance (i.e., the disturbance suppression function). Although Patent Literature 1 teaches that the disturbance estimator is able to perform its control in a shorter control cycle than the control cycle of the model predictive control function, the control system of Patent Literature 1 still has room for improvement in terms of practicality.

In view of the foregoing background, it is therefore an object of the present disclosure to provide a control system, a control method, and a program, all of which contribute to improving practicality in terms of the model predictive control function and the disturbance suppression function.

A control system according to an aspect of the present disclosure provides an output signal including a first manipulative variable to a control target. The control system includes a disturbance estimator, a model predictive controller, and a modifier. The disturbance estimator estimates, based on the first manipulative variable and a controlled variable, a disturbance generated by, or applied to, the control target and outputs, as a result of estimation, an estimation signal including an amount of disturbance. The control target outputs a controlled variable signal including the controlled variable according to the first manipulative variable. The model predictive controller calculates a second manipulative variable based on the controlled variable to output a control signal including the second manipulative variable. The modifier modifies the second manipulative variable by reference to modification information based on the amount of disturbance and thereby provides the output signal including the first manipulative variable as the second manipulative variable thus modified. The model predictive controller includes one or more first processors that perform processing on model predictive control. The disturbance estimator includes one or more second processors that perform processing on disturbance estimation. The model predictive controller outputs the control signal in a first output cycle. The disturbance estimator outputs the estimation signal in a second output cycle. The modifier provides the output signal in a third output cycle. The second output cycle and the third output cycle are both shorter than the first output cycle.

A control method according to another aspect of the present disclosure is a method for controlling a control system that provides an output signal including a first manipulative variable to a control target. The control method includes a disturbance estimation step, a model predictive control step, and a modification step. The disturbance estimation step includes estimating, based on the first manipulative variable and a controlled variable, a disturbance generated by, or applied to, the control target and outputting, as a result of estimation, an estimation signal including an amount of disturbance. The control target outputs a controlled variable signal including a controlled variable according to the first manipulative variable. The model predictive control step includes calculating a second manipulative variable based on the controlled variable to output a control signal including the second manipulative variable. The modification step includes modifying the second manipulative variable by reference to modification information based on the amount of disturbance and thereby providing the output signal including the first manipulative variable as the second manipulative variable thus modified. The model predictive control step is performed by one or more first processors that perform processing on model predictive control. The disturbance estimation step is performed by one or more second processors that perform processing on disturbance estimation. The model predictive control step includes outputting the control signal in a first output cycle. The disturbance estimation step includes outputting the estimation signal in a second output cycle. The modification step includes providing the output signal in a third output cycle. The second output cycle and the third output cycle are both shorter than the first output cycle.

A program according to still another aspect of the present disclosure is designed to cause one or more processors to perform the control method described above.

The present disclosure achieves the advantage of contributing to improving practicality in terms of the model predictive control function and the disturbance suppression function.

**Brief Description of Drawings**

[FIG. 1] FIG. 1 illustrates a block configuration for a control system according to an exemplary embodiment;
[FIG. 2A] FIG. 2A illustrates a block configuration for a model predictive controller included in the control system;
[FIG. 2B] FIG. 2B illustrates a block configuration for a disturbance estimator included in the control system;
[FIG. 3A] FIG. 3A is a comparative graph showing a manipulative variable in a situation where correction to be made by a corrector included in the control system is not applied;
[FIG. 3B] FIG. 3B is a graph showing a manipulative variable in a situation where the correction made by the corrector of the control system is applied;
[FIG. 4] FIG. 4 is a flowchart showing the procedure of operation of the control system;
[FIG. 5] FIG. 5 illustrates a block configuration for use to describe a first exemplary application of the control system;
[FIG. 6] FIG. 6 illustrates a block configuration for use to describe a second exemplary application of the control system;
[FIG. 7] FIG. 7 illustrates a block configuration according to a first variation of the control system;
[FIG. 8] FIG. 8 illustrates a block configuration according to a second variation of the control system; and
[FIG. 9] FIG. 9 illustrates a block configuration according to a third variation of the control system.

**Description of Embodiments**

(Overview)

A control system, control method, and program according to an exemplary embodiment and its variations will now be described with reference to the accompanying drawings. Note that the embodiment and its variations to be described below are only an exemplary one of various embodiments of the present disclosure and its variations and should not be construed as limiting. Rather, the exemplary embodiment and its variations may be readily modified in various manners depending on a design choice or any other factor without departing from the scope of the present disclosure. Optionally, the configuration according to any of the variations that will be described later may be adopted as appropriate in combination with the configuration of the exemplary embodiment or any other variation(s).

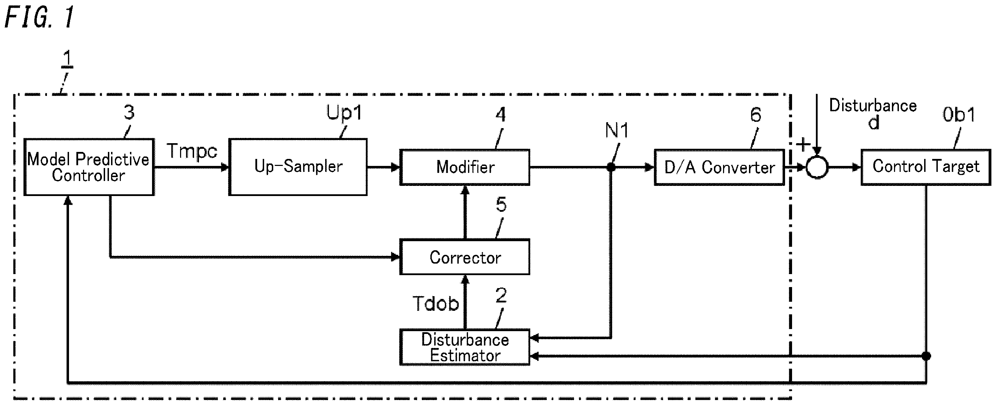

A control system 1 (refer to FIG. 1) according to an aspect is a system that uses the function of model predictive control (hereinafter abbreviated as "MPC") for doing optimization while predicting a future response at each point in time. The control system 1 provides an output signal including a first manipulative variable to a control target Ob1 (refer to FIG. 1). That is to say, the control system 1 gives control input (as the first manipulative variable) to the control target Ob1 using the result of prediction by MPC. Specifically, the MPC solves an optimization problem in every control cycle based on the model of the control target Ob1 and the control system 1 performs feedback control on the control target Ob1 based on the result.

The control target Ob1 as used herein is not limited to any particular type. Examples of the control target Ob1 may include a servo motor for driving a load device and a detection unit (such as an encoder) for detecting the position, velocity, and other parameters of a servo motor.

If the control target Ob1 includes a servo motor, then the first manipulative variable, for example, may be one or more control values with respect to the servo motor. The one or more control values may be, for example, one or more parameter values selected from the group consisting of the drive current, drive voltage, torque, propulsion, velocity, and position of the servo motor. The control target Ob1 outputs a controlled variable signal including a controlled variable according to the first manipulative variable. In this case, the controlled variable is a quantity indicating the state of the control target Ob1 and may include, for example, the position, velocity, and other parameters of the servo motor detected by the detection unit. The MPC performs feedback control using the controlled variable (such as the position and velocity of the servo motor) detected by the detection unit.

As shown in FIG. 1, the control system 1 includes a disturbance estimator 2, a model predictive controller 3, and a modifier 4.

The disturbance estimator 2 estimates, based on the first manipulative variable and the controlled variable, a disturbance generated by, or applied to, the control target Ob1 and outputs, as a result of estimation, an estimation signal including the amount of disturbance.

The model predictive controller 3 has the MPC function. The model predictive controller 3 calculates a second manipulative variable based on the controlled variable to output a control signal including the second manipulative variable. The modifier 4 modifies the second manipulative variable by reference to modification information based on the amount of disturbance and thereby provides an output signal including the first manipulative variable that is the second manipulative variable thus modified.

That is to say, the control system 1 has the MPC function and the function of estimating the amount of disturbance and modifying the manipulative variable predicted by the MPC to reduce the effect of the disturbance (hereinafter referred to as a "disturbance suppression function").

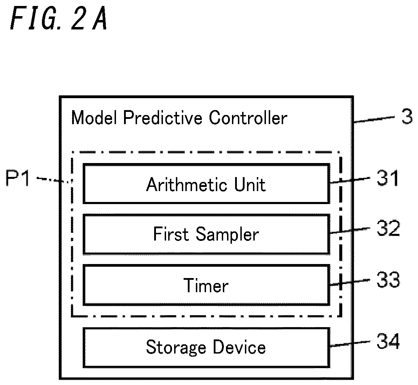

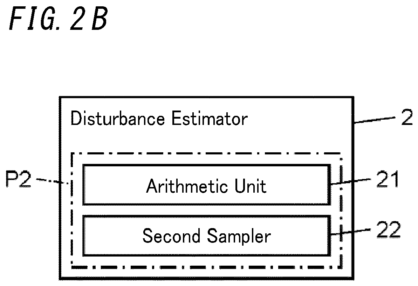

The model predictive controller 3 includes one or more first processors P1 (refer to FIG. 2A) that perform processing on model predictive control. The disturbance estimator 2 includes one or more second processors P2 (refer to FIG. 2B) that perform processing on disturbance estimation. The model predictive controller 3 outputs the control signal in a first output cycle. The disturbance estimator 2 outputs the estimation signal in a second output cycle. The modifier 4 provides the output signal in a third output cycle. The second output cycle and the third output cycle are both shorter than the first output cycle.

In this control system 1, the model predictive control function and the disturbance estimation function are performed by mutually different processors. The second output cycle of the disturbance estimator 2 and the third output cycle of the modifier 4 are both shorter than the first output cycle of the model predictive controller 3. That is to say, the second output cycle of the disturbance estimator 2 and the third output cycle of the modifier 4 are set independently of the first output cycle of the model predictive controller 3. This reduces the chances of a causing a decline in the function of removing or suppressing a disturbance (i.e., the disturbance suppression function) compared to, for example, a situation where the processing by the disturbance estimator 2 is delayed in sync with the MPC. In addition, this allows for providing, with good stability, a configuration that makes it easier to set the second output cycle of the disturbance estimator 2 and the third output cycle of the modifier 4 independently of the first output cycle of the model predictive controller 3. In particular, this makes it easier to provide the model predictive control function for a first device including a processor with relatively high processing performance (i.e., a relatively expensive processor) and provide the disturbance estimation function for a second device including a processor with lower processing performance than the processor of the first device (i.e., a relatively inexpensive processor). For example, the second device may be disposed closer to the control target Ob1 than the first device is to shorten the cable length of a connection cable to connect the second device to the control target Ob1. This reduces the communication delay and reduces the chances of causing a decline in the disturbance suppression function. Consequently, this control system 1 achieves the advantage of contributing to improving the practicality in terms of the model predictive control function and the disturbance suppression function.

A control method according to another aspect is a method for controlling the control system 1. The control method includes a disturbance estimation step, a model predictive control step, and a modification step. The disturbance estimation step includes estimating, based on a first manipulative variable and a controlled variable, a disturbance caused or applied to a control target Ob1 and outputting, as a result of estimation, an estimation signal including an amount of disturbance. The control target Ob1 outputs a controlled variable signal including the controlled variable according to the first manipulative variable. The model predictive control step includes calculating a second manipulative variable based on the controlled variable to output a control signal including the second manipulative variable. The modification step includes modifying the second manipulative variable by reference to modification information based on the amount of disturbance and thereby providing the output signal including the first manipulative variable as the second manipulative variable thus modified. The model predictive control step is performed by one or more first processors P1 that perform processing on model predictive control. The disturbance estimation step is performed by one or more second processors P2 that perform processing on disturbance estimation. The model predictive control step includes outputting the control signal in a first output cycle. The disturbance estimation step includes outputting the estimation signal in a second output cycle. The modification step includes providing the output signal in a third output cycle. The second output cycle and the third output cycle are both shorter than the first output cycle. This control method achieves the advantage of contributing to improving the practicality in terms of the model predictive control function and the disturbance suppression function.

This control method is used on a computer system (i.e., the control system 1). That is to say, this control method may also be implemented as a computer program. A program according to still another aspect is designed to cause one or more processors to perform the control method described above. Optionally, the program may be stored on a non-transitory storage medium which is readable for a computer.

(Details)

(1) Overall configuration

Next, an overall system including the control system 1 according to this embodiment and peripheral components thereof will be described in detail with reference to FIGS. 1, 2A, and 2B.

The control system 1 is electrically connected to a control target Ob1 (such as a plant) and configured to provide an output signal (electrical signal), including a first manipulative variable (control input), to the control target Ob1. As shown in FIG. 1, a disturbance d (i.e., an unnecessary signal) may be applied to the output signal supplied from the control system 1 to the control target Ob1. The disturbance d may not only be applied to the output signal but also be generated by, or applied to, the control target Ob1.

In the following description, suppose there is only one type of first manipulative variable. There is one control input (first manipulative variable) to the control target Ob1. The first manipulative variable may be a manipulative variable with respect to a (drive) current for performing driving control on the control target Ob1, for example. However, this is only an example and should not be construed as limiting. Alternatively, there may be multiple types of first manipulative variables (including current, voltage, position, torque, and velocity). In that case, the control system 1 may provide an output signal, corresponding to the first manipulative variable of each of these multiple types, to the control target Ob1.

The control target Ob1 may include, for example, a load device, a servo motor for driving the load device, and a detection unit (such as an encoder) for detecting the position, velocity, and other parameters of the servo motor as described above. The control target Ob1 outputs, in response to the first manipulative variable that has been input (and may include the disturbance d), a controlled variable signal including a controlled variable (plant output). As used herein, the "controlled variable (plant output)" refers to a quantity indicating the state of the control target Ob1.

In the following description, suppose there is only one type of controlled variable. That is to say, there is one plant output (controlled variable) provided by the control target Ob1. For example, in the control target Ob1, the servo motor is driven in accordance with a drive current that may include the disturbance d (first manipulative variable) and the detection unit outputs a controlled variable signal including the velocity of the servo motor (controlled variable) to an external device (i.e., the control system 1). Alternatively, there may be multiple types of controlled variables (including current, voltage, position, torque, and velocity). In that case, the control target Ob1 may output a controlled variable signal, corresponding to the controlled variable of each of these multiple types, to the control system 1. That is to say, the control target Ob1 may be a multiple input/output plant.

Also, in the following description, the signal cycle of the controlled variable signal output by the control target Ob1 is supposed to be approximately as long as the signal cycle of an output signal including control input (i.e., first manipulative variable) to the control target Ob1.

The control system 1 includes a computer system including one or more processors and a memory. At least some functions of the control system 1 are performed by making the processor of the computer system execute a program stored in the memory of the computer system. The program may be stored in advance in the memory. Alternatively, the program may also be downloaded via a telecommunications line such as the Internet or distributed after having been stored in a non-transitory storage medium such as a memory card.

The control system 1 includes a disturbance estimator 2, a model predictive controller 3, a modifier 4, a corrector 5, an up-sampler Up1, and a D/A converter 6 as shown in FIG. 1. In other words, the control system 1 has the function as the disturbance estimator 2, the function as the model predictive controller 3, the function as the modifier 4, the function as the corrector 5, the function as the up-sampler Up1, and the function as the D/A converter 6. These functions of the control system 1 may be housed in a single housing or distributed separately in multiple housings, whichever is appropriate.

The model predictive controller 3 has an MPC function. The model predictive controller 3 includes a storage device 34 as shown in FIG. 2A. The storage device 34 includes an electrically programmable nonvolatile semiconductor memory such as a flash memory. The storage device 34 stores a predictive model about the control target Ob1. As the predictive model, a transfer function model or a state space model may be used, for example.

The model predictive controller 3 is electrically connected to the control target Ob1 to receive the controlled variable signal from the control target Ob1. The model predictive controller 3 includes one or more (e.g., one) first processors P1 which operate in a first operating cycle to perform processing on model predictive control as shown in FIG. 2A. The first operating cycle corresponds, for example, to a sampling cycle Tmpc in which data about the controlled variable included in the controlled variable signal output by the control target Ob1 is sampled. The model predictive controller 3 calculates, using the predictive model, a second manipulative variable based on the controlled variable in every sampling cycle Tmpc (i.e., first operating cycle). The second manipulative variable is the same type of physical quantity as the first manipulative variable. For example, if the first manipulative variable is a manipulative variable about a drive current for a servo motor, then the second manipulative variable is also a manipulative variable about the drive current for the servo motor.

The model predictive controller 3 outputs a control signal including the second manipulative variable thus calculated. The control signal output by the model predictive controller 3 is a digital signal. As shown in FIG. 1, the model predictive controller 3 outputs the control signal to the up-sampler Up1 that follows the model predictive controller 3.

In this case, the model predictive controller 3 outputs the control signal in a first output cycle. The first output cycle is equal to or longer than the first operating cycle. In this embodiment, the first output cycle is supposed to be as long as the first operating cycle (i.e., the sampling cycle Tmpc) to make the description easily understandable. Thus, in the following description, the first output cycle will be hereinafter sometimes referred to as a "first output cycle Tmpc" (refer to FIG. 1). However, this is only an example and should not be construed as limiting. Alternatively, the first output cycle may be longer than the sampling cycle Tmpc.

The first processor P1 includes an arithmetic unit 31, a first sampler 32, and a timer 33 that operates in a constant cycle as shown in FIG. 2A.

The first sampler 32 performs down sampling on the controlled variable toward the first operating cycle (i.e., the sampling cycle Tmpc). The first sampler 32 may include a down-sampler. The controlled variable signal including the controlled variable which is output by the control target Ob1 is sometimes a continuous analog signal and sometimes a discrete digital signal. If the signal cycle of the controlled variable signal is shorter than the first operating cycle (i.e., the sampling cycle Tmpc), then the first processor P1 makes, with respect to the controlled variable, the first sampler 32 perform a cycle conversion to convert the signal cycle of the controlled variable signal into the first operating cycle (i.e., the sampling cycle Tmpc) that is longer than the signal cycle of the controlled variable signal, thereby performing data sampling.

The arithmetic unit 31 performs finite time prediction on the second manipulative variable using a controlled variable indicating the state of the control target Ob1. Specifically, the arithmetic unit 31 operates in the first operating cycle with respect to the result of sampling made by the first sampler 32 to perform arithmetic processing about the model predictive control. The arithmetic unit 31 operates in the first operating cycle based on the constant cycle of the timer 33 to perform the arithmetic processing about the model predictive control. For example, the arithmetic unit 31 may operate in the first operating cycle based on the clock cycle of the timer 33.

In some cases, the control target Ob1 may have been affected by the disturbance d and the controlled variable indicating the state of the control target Ob1 may also have been affected by the disturbance d. For example, if the controlled variable indicating the state of the control target Ob1 is either the position or velocity of a servo motor, then a position or velocity (controlled variable) may be input to the model predictive controller 3 with the disturbance d taken into account. In this embodiment, the control system 1 includes the disturbance estimator 2 as the function of removing the disturbance d from the result of prediction (second manipulative variable) output by the model predictive controller 3.

The disturbance estimator 2 includes one or more (e.g., one in this example) second processors P2 (refer to FIG. 2B) that operates in a second operating cycle to perform processing on disturbance estimation. The disturbance estimator 2 is electrically connected to the control target Ob1 to receive the controlled variable signal from the control target Ob1 as shown in FIG. 1. In addition, the disturbance estimator 2 is also electrically connected to a connection node N1 (node) between the modifier 4 and the D/A converter 6 to receive the output signal (first manipulative variable) of the modifier 4. The disturbance estimator 2 estimates, based on the first manipulative variable output by the modifier 4 and the controlled variable provided by the control target Ob1, the disturbance that has been generated by, or applied to, the control target Ob1, thereby outputting an estimation signal including the amount of disturbance as the result of estimation. The disturbance estimator 2 is implemented as a disturbance observer (DOB) for calculating (or estimating) the amount of disturbance based on the first manipulative variable and the controlled variable. The estimation signal output by the disturbance estimator 2 is a digital signal.

The disturbance estimator 2 outputs the estimation signal in a second output cycle. The second output cycle is equal to or longer than the second operating cycle. In this embodiment, the second output cycle is supposed to be as long as the second operating cycle (i.e., the sampling cycle Tdob) to make the description easily understandable. Thus, in the following description, the second output cycle will be hereinafter sometimes referred to as a "second output cycle Tdob" (refer to FIG. 1). However, this is only an example and should not be construed as limiting. Alternatively, the second output cycle may be longer than the sampling cycle Tdob.

The second processor P2 includes an arithmetic unit 21 and a second sampler 22 as shown in FIG. 2B. The second sampler 22 performs data sampling on the controlled variable included in the controlled variable signal provided by the control target Ob1 with the second operating cycle set at the sampling cycle Tdob. The arithmetic unit 21 operates in the second operating cycle to perform arithmetic processing on the result of sampling made by the second sampler 22 to estimate the amount of disturbance. The arithmetic unit 21 compares the first manipulative variable output by the modifier 4 with the controlled variable provided by the control target Ob1 to estimate the amount of disturbance. The disturbance estimator 2 outputs an estimation signal, including the result of calculation (i.e., the amount of disturbance) obtained by the arithmetic unit 21, in the second output cycle Tdob to feed back the estimation signal to the control input of the control target Ob1. Note that in this embodiment, the corrector 5 is provided to follow the disturbance estimator 2 and to receive the estimation signal from the disturbance estimator 2.

In this embodiment, the second output cycle Tdob is shorter than first output cycle Tmpc, and Tmpc = n·Tdob (where n > 1) is satisfied. In particular, in this embodiment, the first output cycle Tmpc and the second output cycle Tdob are set to satisfy Tmpc > Tdob $\geq$ Ts, where Ts is a constant cycle, Tmpc is the first operating cycle and Tdob is the second operating cycle. In other words, the first output cycle Tmpc and the second output cycle Tdob are set independently of each other to reduce their degree of mutual dependence.

The up-sampler Up1 performs a cycle conversion to convert the control signal having the first output cycle Tmpc which has been output by the model predictive controller 3 into a signal having the second output cycle Tdob and outputs the signal thus converted to the modifier 4. The up-sampler Up1 may include an up-sampler. In this embodiment, the second output cycle Tdob is shorter than the first output cycle Tmpc. That is why to allow the modifier 4 that follows the up-sampler Up1 to modify the second manipulative variable more easily (i.e., to synchronize the timing to make modification calculation on the manipulative variable with the second output cycle Tdob), the up-sampler Up1 shortens the cycle of (i.e., makes up-sampling of) the control signal provided by the model predictive controller 3. The up-sampler Up1 outputs the control signal that has been subjected to the cycle conversion to the modifier 4.

The modifier 4 modifies (i.e., compensates for) the second manipulative variable by reference to modification information based on the amount of disturbance estimated and provides an output signal including the first manipulative variable as the second manipulative variable that has been modified (or compensated for). The modifier 4 provides the output signal in a third output cycle. The output signal provided by the modifier 4 is a digital signal. The second output cycle Tdob and the third output cycle are both shorter than the first output cycle Tmpc. In this embodiment, the second output cycle Tdob is as long as the third output cycle as an example. However, this is only an example and should not be construed as limiting. Alternatively, the second output cycle Tdob may have a different length from the third output cycle.

In this embodiment, the D/A converter 6 is arranged to follow the modifier 4 so that the modifier 4 provides the output signal, including the first manipulative variable as the second manipulative variable that has been modified, to the D/A converter 6.

In this embodiment, the modification information is a piece of information including the result of correction made by the corrector 5 (to be described later). However, the control system 1 does not have to include the corrector 5. If no corrector 5 is provided, then the modification information may be a piece of information based on the amount of disturbance included in the estimation signal provided by the disturbance estimator 2.

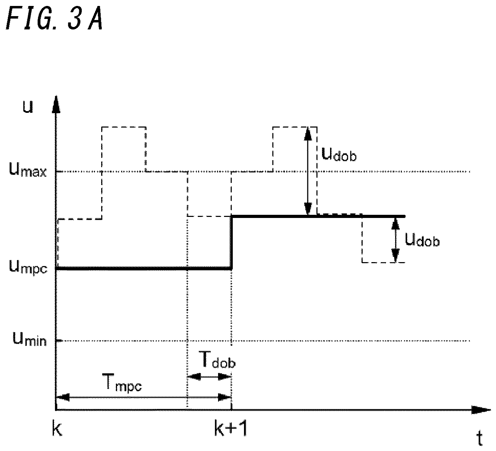

Next, it will be described, before the corrector 5 is described, with reference to the graph shown in FIG. 3A what function the modifier 4 will have if no corrector 5 is provided. In the graph shown in FIG. 3A, the abscissa indicates the time (t), and the ordinate indicates the manipulative variable (u). That is to say, FIG. 3A shows the time-series data of the manipulative variable.

The bold line shown in FIG. 3A indicates the data (digital signal waveform) of the second manipulative variable Umpc output by the model predictive controller 3. In FIG. 3A, a part of the graph representing the second manipulative variable Umpc which falls within the range from a time t = k to a time t = k +1 corresponds to one cycle (before the cycle is up-sampled by the up-sampler Up1), i.e., the first output cycle Tmpc.

Also, in FIG. 3A, the difference between the bold line and the dotted line indicates data (digital signal waveform) about the amount of modification Udob (modification information) with respect to the amount of disturbance which may be added to (or subtracted from) the second manipulative variable Umpc indicated by the bold line. The amount of modification Udob and the amount of disturbance provided by the disturbance estimator 2 have the same absolute value but have mutually opposite signs. The amount of modification Udob is a quantity for offsetting the disturbance d. Thus, if the sign of the amount of disturbance is positive, then the sign of the amount of modification Udob is negative. On the other hand, if the sign of the amount of disturbance is negative, then the sign of the amount of modification Udob is positive. In the following description, the amount of disturbance estimated by the disturbance estimator 2 will be hereinafter designated by "d^." Note that d^ is expressed as:

[Mathematical Expression 1]

$$\hat{d}$$

in the equations (5) and (8) to be referred to later.

In the example shown in FIG. 3A, the second output cycle Tdob of the amount of disturbance d^ output by the disturbance estimator 2 (i.e., the second output cycle Tdob of the amount of modification Udob) is a quarter of the first output cycle Tmpc of the second manipulative variable Umpc output by the model predictive controller 3. That is to say, N =4 in Tmpc = N·Tdob. Thus, it can be said that the output of the disturbance estimator 2 has a higher frequency than the output of the model predictive controller 3.

The modifier 4 adds (or subtracts), in every second output cycle Tdob, the amount of modification Udob to (or from) the second manipulative variable Umpc (that has been up-sampled by the up-sampler Up1) to provide an output signal.

As can be seen from FIG. 3A, were it not for the function of the corrector 5, adding the amount of modification Udob to the second manipulative variable Umpc would allow the first manipulative variable to exceed the upper limit value Umax (to be described later).

The corrector 5 is configured to correct the amount of disturbance that has been estimated by the disturbance estimator 2 to satisfy a predetermined constrained condition. In this embodiment, the corrector 5 is provided between the disturbance estimator 2 and the modifier 4 as shown in FIG. 1. The modifier 4 modifies the second manipulative variable using, as modification information, the result of correction made by the corrector 5.

In this embodiment, the predetermined constrained condition is that a value regarding a first manipulative variable based on the amount of disturbance that has been corrected fall within a predetermined constraint range having a lower limit value and an upper limit value. As used herein, the "constrained condition" refers to a condition on a constraint imposed on the device (as the control target Ob1) and/or a condition (such as the maximum amplitude of the voltage) on the supply voltage for a controller (such as a servo driver) for the device, and varies according to the type and specification (standard) of the device included in the control system. In the following description, the "value regarding the first manipulative variable" is supposed to be the value of the first manipulative variable. However, this is only an example and should not be construed as limiting. Alternatively, the "value regarding the first manipulative variable" may also be a variation in the first manipulative variable.

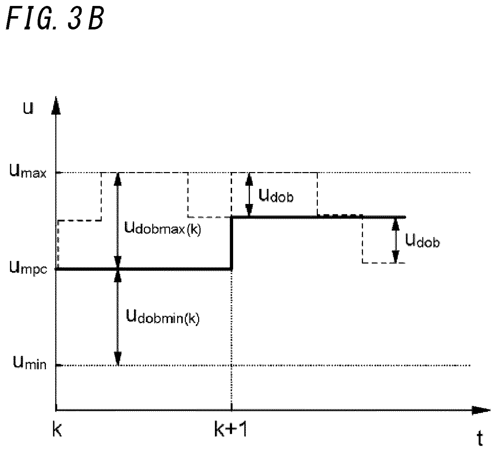

The function of the corrector 5 will now be described with reference to the graph shown in FIG. 3B. In the graph shown in FIG. 3B, as well as in the graph shown in FIG. 3A, the abscissa indicates the time (t), and the ordinate indicates the manipulative variable (u). That is to say, FIG. 3B shows the time series data of the manipulative variable. FIG. 3B is the same as FIG. 3A except the amount of modification Udob (represented by the difference between the bold line and the dotted line), and therefore, description thereof will be omitted as appropriate herein.

In this embodiment, a lower limit value Umin and an upper limit value Umax are set with respect to the second manipulative variable Umpc that has been modified as shown in FIGS. 3A and 3B. The corrector 5 corrects the amount of disturbance to allow the second manipulative variable Umpc to fall within a predetermined constraint range defined by the lower limit value Umin and the upper limit value Umax when the amount of modification Udob is added by the modifier 4 to the second manipulative variable Umpc every second output cycle Tdob. For example, if the control target Ob1 is a servo motor, the torque and/or velocity of the servo motor may be saturated once the drive current (manipulative variable) given as control input has exceeded the upper limit value Umax to fall outside of the constraint range. Particularly if the manipulative variable is output to the control target Ob1 in every second output cycle Tdob, which is shorter than the first output cycle Tmpc (i.e., frequently) as in this embodiment, then chances that the manipulative variable exceeds the constraint imposed on the device (i.e., the control target Ob1) and/or the constraint imposed on the controller for the device will increase.

The corrector 5 corrects the amount of disturbance in advance before the processing is performed by the modifier 4 to prevent the second manipulative variable modified (i.e., the first manipulative variable) from falling outside of the constraint range when the amount of modification Udob corresponding to the amount of disturbance is added by the modifier 4 to the second manipulative variable Umpc indicated by the bold line in every second output cycle Tdob. If the second manipulative variable modified (i.e., the first manipulative variable) is greater than the upper limit value Umax, for example, then the corrector 5 corrects the amount of disturbance in advance before the processing is performed by the modifier 4 to make the second manipulative variable modified equal to the upper limit value Umax (refer to FIG. 3B). On the other hand, if the second manipulative variable modified (i.e., the first manipulative variable) is less than the lower limit value Umin, for example, then the corrector 5 corrects the amount of disturbance in advance before the processing is performed by the modifier 4 to make the second manipulative variable modified equal to the lower limit value Umin.

Specifically, if the second manipulative variable modified, calculated by adding the amount of modification Udob to the second manipulative variable Umpc (i.e., the first manipulative variable) is u', then u' = Umpc + Udob is satisfied.

In this case, the corrector 5 corrects the amount of disturbance (which has the same absolute value as, but the opposite sign from, the amount of modification Udob) to satisfy the inequality $0 \leq Umin \leq u' \leq Umax$.

In other words, if the upper and lower limit values of the amount of modification Udob to satisfy, at a time t = k, the constrained condition on the second manipulative variable Umpc(k) at the time t = k are Udomax(k) and Udomin(k), respectively, these upper and lower limit values are given by the following equations (1). Note that the second manipulative variable Umpc(k) at the time t = k will be constant through a time t = k + 1, and therefore, the upper limit value Udomax(k) and the lower limit value Udomin(k) will also be constant through the time t = k +1 (refer to FIG. 3B). At the time t = k +1, the second manipulative variable is Umpc(k+1), and therefore, the upper and lower limit values of the amount of modification Udob are variable.

[Mathematical Expression 2]

$$u_{dobMax}(k) = u_{Max} - u_{mpc}(k)$$

$$u_{dobmin}(k) = u_{min} - u_{mpc}(k) \tag{1}$$

The corrector 5 calculates, by these equations (1), the upper and lower limit values of the amount of modification Udob at times t = k, k +1, and so on.

Then, the corrector 5 corrects the amount of disturbance d^ (k + i/N) (which has the same absolute value as, but the opposite sign from, the amount of modification Udob(k + i/N)) to allow the amount of modification Udob (k + i/N) to satisfy the following equations (2) to meet the constrained condition: 0 ≤ Umin ≤ u' ≤ Umax at a time t = k + i/N (where i = 0, 1, ..., and N - 1). In the example shown in FIG. 3B, N in the following equations (2) is 4.

[Mathematical Expression 3]

$$u_{min} - u_{mpc}(k) \leq u_{dob}(k + \tfrac{i}{N}) \leq u_{Max} - u_{mpc}(k)$$

$$u_{dobmin}(k) \leq u_{dob}(k + \tfrac{i}{N}) \leq u_{dobMax}(k) \tag{2}$$

Note that the corrector 5 includes, for example, a storage device (e.g., an electrically programmable nonvolatile semiconductor memory such as a flash memory) and stores information about the constrained condition (e.g., an upper limit value Umax and a lower limit value Umin) in the storage device. In addition, to make correction, the corrector 5 acquires information about the second manipulative variable Umpc (e.g., information about the second manipulative variable Umpc(k) at the time t =k in the example described above) directly from the model predictive controller 3.

Making the corrector 5 correct the amount of disturbance with the constraint imposed on the device and the constraint imposed on the controller for the device taken into account in this manner eliminates the need to calculate the second manipulative variable by having the model predictive controller 3 provide a constraint on the device or a constraint on the controller for the device with respect to the second manipulative variable. This may reduce the amount of MPC calculations to make and contribute to further speeding up the MPC.

As described above, the "value regarding the first manipulative variable" may also be a variation in the first manipulative variable. In that case, the corrector 5 calculates, by the following equations (3), an upper limit value ΔUdobmax and a lower limit value ΔUdobmin of the variations in the amount of modification Udob at times t = k, k + 1, and so on. In the following equations (3), the variation ΔUmpc(k) in the second manipulative variable at the time t = k in the following equations (3) is the difference between the second manipulative variable at the time t = k and the second manipulative variable at the time t = k - 1 and is calculated by the equation: ΔUmpc(k) = Umpc(k) - Umpc(k-1). The variation ΔUmpc(k) in the second manipulative variable at the time t = k will be constant through the time t = k + 1, and therefore, the upper limit value ΔUdobmax(k) and the lower limit value ΔUdobmin(k) will also be constant through the time t=k+ 1.

[Mathematical Expression 4]

$$\Delta u_{dobMax}(k) = \Delta u_{Max} - \Delta u_{mpc}(k)$$

$$\Delta u_{dobmin}(k) = \Delta u_{min} - \Delta u_{mpc}(k) \tag{3}$$

Supposing the variation in the first manipulative variable is Δu', the upper limit value of the variation is ΔUmax, and the lower limit value of the variation is ΔUmin, the corrector 5 corrects the variation Δd^ (k + i/N) in the amount of disturbance (which has the same absolute value as, but the opposite sign from, the variation ΔUdob(k + i/N) in the amount of modification) to allow the variation ΔUdob (k + i/N) in the amount of modification to satisfy the following equations (4) to meet the constrained condition: ΔUmin ≤ Δu' ≤ ΔUmax at a time t = k + i/N (where i = 0, 1, ... , and N - 1). In the example shown in FIG. 3B, N in the following equations (4) is 4.

[Mathematical Expression 5]

$$\Delta u_{min} - \Delta u_{mpc}(k) \leq \Delta u_{dob}\left(k + \frac{i}{N}\right) \leq \Delta u_{Max} - \Delta u_{mpc}(k)$$

$$\Delta u_{dobmin}(k) \leq \Delta u_{dob}\left(k + \frac{i}{N}\right) \leq \Delta u_{dobMax}(k) \qquad \cdots \tag{4}$$

As can be seen, providing a constraint for the variation in the first manipulative variable allows for reducing the vibration of the control target Ob1.

The D/A converter 6 converts the output signal provided by the modifier 4 into an analog signal and outputs the analog signal to the control target Ob1. The output terminal of the D/A converter 6 is electrically connected to a control input terminal of the control target Ob1. The output signal, including the second manipulative variable that has been modified (i.e., the first manipulative variable), of the modifier 4 is a digital signal having discrete values. The D/A converter 6 converts the digital signal into an analog signal that changes continuously and outputs the analog signal to the control target Ob1.

(2) Operation of control system

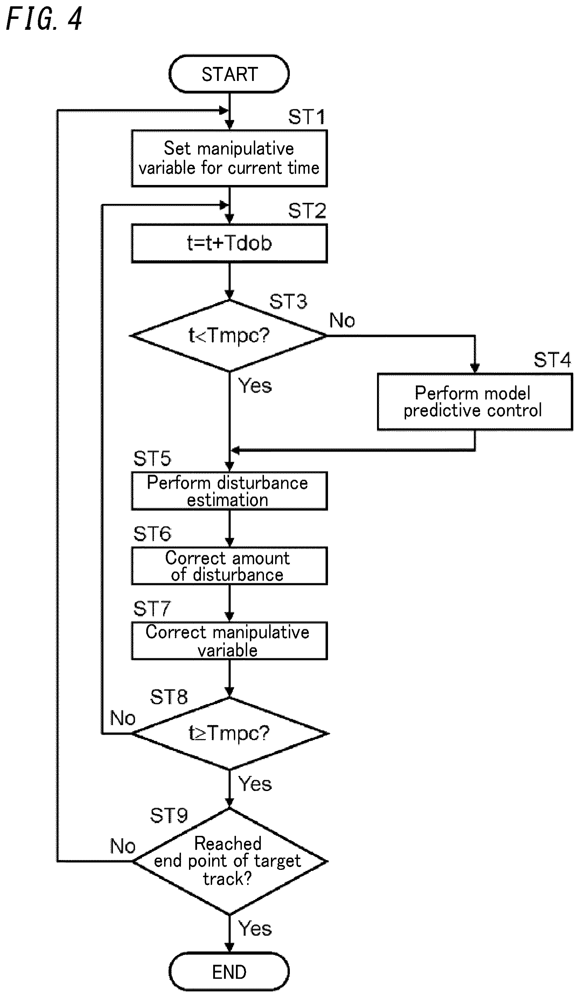

Next, the procedure of operation of the control system 1 will be described with reference to FIG. 4. Note that the flowchart shown in FIG. 4 is only an exemplary procedure of operation of the control system 1 and should not be construed as limiting. Optionally, the processing steps shown in FIG. 4 may be performed in a different order from the illustrated one, some of the processing steps shown in FIG. 4 may be omitted as appropriate, and/or an additional processing step may be performed as needed.

First, the control system 1 sets, by the following Equations (5), a first manipulative variable u'(t) for the current time t at a first manipulative variable u'(t-Tdob) for the previous time which is earlier than the current time by one cycle corresponding to the sampling cycle Tdob of the disturbance estimator 2. Then, the control system 1 sets the first manipulative variable u'(0) for the current time t = 0 at u'(t) (in Step ST1). As used herein, the phrase "earlier than the current time by one cycle" refers to a time which is earlier than the current time t by one sampling period Tdob.

[Mathematical Expression 6]

$$u'(t) = u'(t - Tdob), \quad u'(0) = u'(t), \quad t = 0$$

where

$$u'(t) = 0, \quad \hat{d}(t) = 0 \quad \text{if } t < 0 \tag{5}$$

Next, the control system 1 advances the current time t by Tdob (i.e., t = t + Tdob in Step ST2) to a future time which is later by one cycle (i.e., later by one sampling cycle Tdob) than the current time t.

If the current time t is simultaneous with, or later than, the sampling cycle Tmpc of the model predictive controller 3 when advanced by X cycles (if the answer is NO in Step ST3), then the control system 1 makes the model predictive controller 3 perform MPC (i.e., performs a model predictive control step in Step ST4). As used herein, "X" corresponds to the number of times (or number of rounds) that the processing step ST2 has been performed. Specifically, when the processing is completed for the first round, the current time t will have been advanced by one round (i.e., X = 1 Tdob). When the processing is completed for the second round, the current time t will have been advanced by two rounds (i.e., X = 2 Tdob). Furthermore, the control system 1 makes the disturbance estimator 2 predict the amount of disturbance (i.e., performs a disturbance estimation step in Step ST5).

On the other hand, if the current time t is short of the sampling cycle Tmpc of the model predictive controller 3 when advanced by X cycles (if the answer is YES in Step ST3), then the control system 1 makes the disturbance estimator 2 predict the amount of disturbance without performing MPC (i.e., performs a disturbance estimation step in Step ST5). That is to say, MPC is performed every sampling cycle Tmpc.

The control system 1 makes the corrector 5 correct the amount of disturbance that has been predicted by the disturbance estimator 2 (in Step ST6). In addition, the control system 1 also modifies, based on the amount of disturbance corrected, the second manipulative variable output by the model predictive controller 3 (i.e., performs a modification step in Step ST7).

If the current time t is short of the sampling cycle Tmpc of the model predictive controller 3 when advanced by X cycles (if the answer is NO in Step ST8), then the control system 1 returns to the processing step ST2, in which the control system 1 further advances the current time t by one more cycle (i.e., by one Tdob) and performs the processing from the processing step ST3 and on. On the other hand, if the current time t is simultaneous with, or later than, the sampling cycle Tmpc of the model predictive controller 3 when advanced by X cycles (if the answer is YES in Step ST8), then the control system 1 makes the model predictive controller 3 determine whether the controlled variable of the control target Ob1 has reached the end point of the target track (in Step ST9).

If the model predictive controller 3 has determined that the controlled variable of the control target Ob1 have reached the end point of the target track (if the answer is YES in Step ST9), then the control system 1 ends the processing. On the other hand, if the model predictive controller 3 has determined that the controlled variable of the control target Ob1 have not reached the end point of the target track yet (if the answer is NO in Step ST9), then the control system 1 returns to the processing step ST1.

(3) Exemplary applications of control system

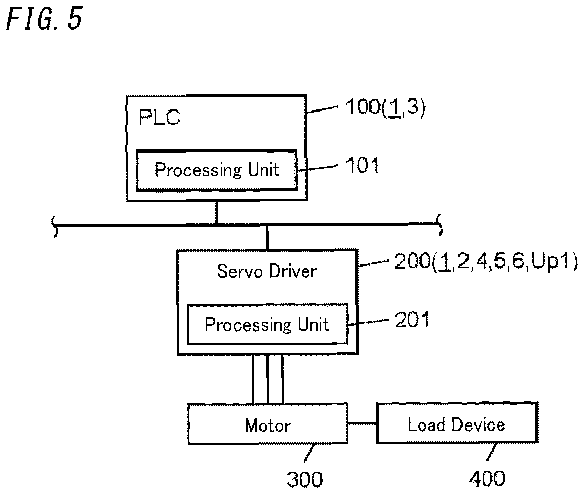

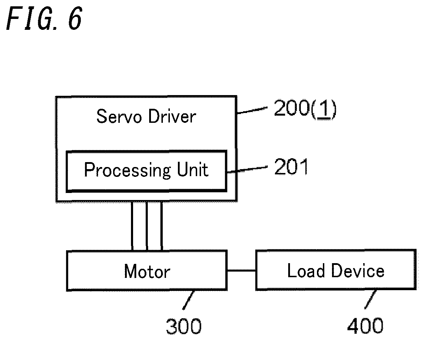

An exemplary application of the control system 1 according to this embodiment will be described with reference to FIGS.5 and 6.

FIG. 5 illustrates a block configuration according to a first exemplary application of the control system 1. In FIG. 5 shown are a programmable logic controller (PLC) 100, a servo driver 200, a motor (servo motor) 300, and a load device 400.

The load device 400 corresponds to a part of the control target Ob1. The load device 400 may include, for example, a mechanical mechanism such as a ball screw mechanism, a gear mechanism, or a belt mechanism. The load device 400 is driven with the motive power supplied from the motor 300. The motor 300 is not limited to any particular type but may be a rotary motor or a linear motor, whichever is appropriate. The motor 300 corresponds to another part of the control target Ob1. The motor 300 may be, for example, a three-phase brushless motor.

The servo driver 200 includes a processing unit 201. The processing unit 201 includes a computer system including one or more processors and a memory. At least some functions of the processing unit 201 are performed by making the processor of the computer system execute a program stored in the memory of the computer system. The program may be stored in advance in the memory. Alternatively, the program may also be downloaded via a telecommunications line such as the Internet or distributed after having been stored in a non-transitory storage medium such as a memory card. The processing unit 201 performs feedback control for determining a control value based on a control signal supplied from the PLC 100 and a detection signal supplied from a detection unit for detecting the state (such as the position, velocity, or any other parameter) of the motor 300, thereby performing driving control on the motor 300 such that a predetermined type of operations is performed. Examples of the control value include a command value about the position of the motor 300, a command value about the torque (or propulsion) of the motor 300, and a command value about the velocity of the motor 300. Examples of the predetermined type of operation include the operations of mounting electronic components and operations of carrying products.

The servo driver 200 further includes an inverter circuit. The processing unit 201 controls the inverter circuit based on the control value thus determined, thereby adjusting the electric power (drive current) to be supplied to the motor 300.

The PLC 100 is a high-order controller and is connected to a plurality of servo drivers 200 (only one of which is shown in FIG. 5) to be ready to communicate with the plurality of servo drivers 200 bidirectionally. The PLC 100 includes a processing unit 101. The processing unit 101 generates a control signal including an operating command about a predetermined type of operations and transmits the control signal to each of the plurality of servo drivers 200 to control the servo driver 200.

In a first exemplary application, among the plurality of functions of the control system 1, the function of the model predictive controller 3 (serving as the first processor P1) is installed in the PLC 100 and the functions of the disturbance estimator 2 (serving as the second processor P2), the corrector 5, the modifier 4, the D/A converter 6, the up-sampler Up1, and other components are installed in the servo drivers 200.

The PLC 100 (serving as the model predictive controller 3) acquires the controlled variable (i.e., a quantity indicating the state of the motor 300) from each of the plurality of servo drivers 200, performs the MPC, and transmits a control signal including the second manipulative variable to each of the plurality of servo drivers 200 on an individual basis. Each of the plurality of servo drivers 200 performs disturbance estimation, corrects the amount of disturbance, modifies the second manipulative variable that the servo driver 200 has received from the PLC 100, and controls an inverter circuit to supply the first manipulative variable (i.e., a drive current) to the motor 300.

According to the first exemplary application, the function of the model predictive controller 3 and the functions of the disturbance estimator 2 and other components are distributed, thus achieving the advantage of reducing the concentration of computation load on the processing unit 101 and the processing unit 201. In particular, in this embodiment, the function of the model predictive control (i.e., the first processor P1) and the function of the disturbance estimation (i.e., the second processor P2) are performed by two different processors. This makes it easier to provide, as in the first exemplary application, the model predictive control function for the PLC 100 including a (relatively expensive) high-performance processor and provide the disturbance estimation function for each of the servo drivers 200 including a (relatively inexpensive) processor, of which the processing performance is lower than that of the processor of the PLC 100.

In other words, according to the first exemplary application, the one or more (e.g., one in this example) first processors P1 are installed in a first device (PLC 100) and the one or more (e.g., one in this example) second processors P2 are installed in a second device (servo drivers 200). The second device is preferably arranged to make a communication distance between the second device and the control target Ob1 shorter than a communication distance between the first device and the control target Ob1 (via the servo drivers 200 in the first exemplary application). For example, the second device (each of the servo drivers 200) may be disposed closer to the control target Ob1 than the first device (PLC 100) is to shorten the cable length of a connection cable (i.e., the communication distance) to connect the second device to the control target Ob1. This reduces the communication delay and reduces the chances of causing a decline in the disturbance suppression function.

FIG. 6 illustrates a block configuration for a control system 1 according to a second exemplary application. In FIG. 6, shown are the servo driver 200, the motor (servo motor) 300, and the load device 400. The servo driver 200, the motor (servo motor) 300, and the load device 400 are the same as their counterparts of the first exemplary application described above, and therefore, description thereof will be omitted herein.

Nevertheless, in the second exemplary application, the plurality of functions of the control system 1 are all installed in each servo driver 200. Each servo driver 200 (control system 1) acquires a controlled variable indicating the state of the motor 300 from the detection unit to perform the MPC and the disturbance estimation. Each servo driver 200 (control system 1) corrects the amount of disturbance, modifies the second manipulative variable, and controls the inverter circuit to supply the first manipulative variable (i.e., a drive current) to the motor 300.

According to the second exemplary application, the plurality of functions of the control system 1 are all installed at a component closer to the control target Ob1 than in the first exemplary application to perform the MPC and the disturbance estimation, thus achieving the advantage of reducing the communication delay.

(4) Advantages

As can be seen from the foregoing description, in a control system 1 according to this embodiment, the model predictive controller 3 includes one or more first processors P1 (refer to FIG. 2A) that perform processing on model predictive control. The disturbance estimator 2 includes one or more second processors P2 (refer to FIG. 2B) that perform processing on disturbance estimation. The second output cycle of the disturbance estimator 2 and the third output cycle of the modifier 4 are both shorter than the first output cycle of the model predictive controller 3. That is to say, the second output cycle of the disturbance estimator 2 and the third output cycle of the modifier 4 are set independently of the first output cycle of the model predictive controller 3. This reduces the chances of a causing a decline in the function of removing or suppressing a disturbance (i.e., the disturbance suppression function) compared to, for example, a situation where the processing by the disturbance estimator 2 is delayed in sync with the MPC. In addition, this allows for providing, with good stability, a configuration that makes it easier to set the second output cycle of the disturbance estimator 2 and the third output cycle of the modifier 4 independently of the first output cycle of the model predictive controller 3. In particular, this makes it easier to provide the model predictive control function for a first device including a processor with relatively high processing performance (i.e., a relatively expensive processor) and provide the disturbance estimation function for a second device including a processor with lower processing performance than the processor of the first device (i.e., a relatively inexpensive processor). For example, the second device may be disposed closer to the control target Ob1 than the first device is to shorten the cable length of a connection cable to connect the second device to the control target Ob1. This reduces the communication delay and reduces the chances of causing a decline in the disturbance suppression function. Consequently, this control system 1 achieves the advantage of contributing to improving the practicality in terms of the model predictive control function and the disturbance suppression function.

In addition, in the control system 1, the amount of disturbance estimated by the disturbance estimator 2 is corrected to satisfy a predetermined constrained condition, thus further improving the practicality in terms of the model predictive control function and the disturbance suppression function.

In particular, the predetermined constrained condition is that a value regarding the first manipulative variable based on the amount of disturbance that has been corrected fall within a predetermined constraint range having a lower limit value and an upper limit value. This may reduce the chances of a first manipulative variable exceeding either the constraint imposed on a device (i.e., the control target Ob1) or the constraint imposed by a controller for the device (in terms of maximum voltage, maximum current, or tolerable torque for a motor) being sent to the device to produce a saturated state (e.g., to produce saturated torque).

(5) Variations

Next, variations of the exemplary embodiment will be enumerated one after another. Note that the variations to be described below may be adopted in combination as appropriate.

The functions of the control system 1 according to the exemplary embodiment described above may be implemented as, for example, a control method, a computer program, or a non-transitory storage medium on which the computer program is stored.

The control system 1 according to the present disclosure includes a computer system. The computer system may include a processor and a memory as principal hardware components thereof. The computer system performs the functions of the control system 1 according to the present disclosure by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits such as an IC or an LSI include integrated circuits called a "system LSI," a "very-large-scale integrated circuit (VLSI)," and an "ultra-large-scale integrated circuit (ULSI)." Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as one or more electronic circuits including a semiconductor integrated circuit or a large-scale integrated circuit.

In the embodiment described above, the plurality of functions of the control system 1 are integrated together in a single housing. However, this is not an essential configuration for the control system 1. Alternatively, those constituent elements of the control system 1 may be distributed in multiple different devices.

Conversely, a plurality of functions of the control system 1 may be aggregated together in a single housing. Still alternatively, at least some functions of the control system 1 (e.g., some functions of the control system 1) may be implemented as a cloud computing system as well.

(5-1) First variation

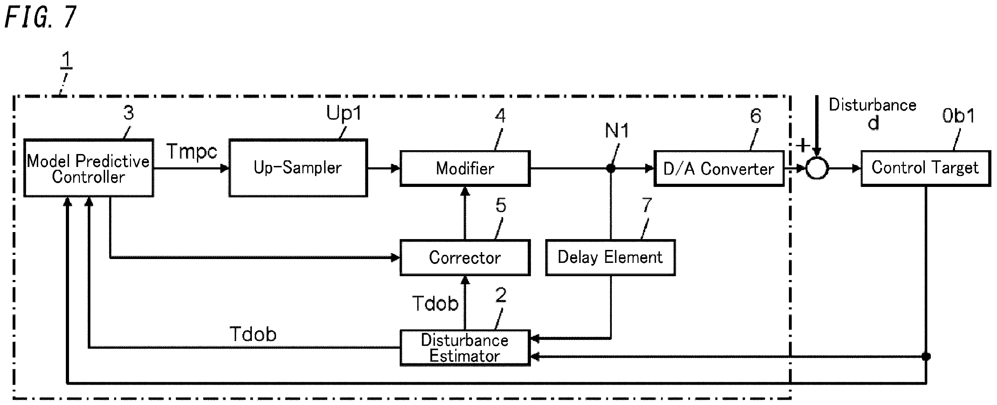

Next, a control system 1 according to a first variation will be described with reference to FIG. 7. In the following description, any constituent element of the control system 1 according to the first variation, having substantially the same function as a counterpart of the control system 1 according to the embodiment described above, will be designated by the same reference numeral as that counterpart's, and a detailed description thereof will be omitted herein.

In the control system 1 according to the first variation, the amount of disturbance estimated by the disturbance estimator 2 is input to the model predictive controller 3 as well and the control system 1 further includes a delay element 7 (refer to FIG. 7), which is a difference from the control system 1 according to the first embodiment described above.

In the first variation, the model predictive controller 3 is electrically connected to the disturbance estimator 2 to be able to acquire the disturbance information about the amount of disturbance that has been estimated by the disturbance estimator 2 as shown in FIG. 7. In the first variation, the model predictive controller 3 calculates a second manipulative variable based on the controlled variable and the disturbance information and outputs a control signal including the second manipulative variable. In the following description, the disturbance information is supposed to be a value representing the amount of disturbance. However, this is only an example and should not be construed as limiting. Alternatively, the disturbance information may also be a variation in the amount of disturbance.

In the first variation, as described above, the control system 1 further includes the delay element 7. The delay element 7 is provided between the disturbance estimator 2 and a connection node N1 (node). The delay element 7 outputs data that was acquired about the first manipulative variable included in the output signal at the previous time earlier than a certain point in time (e.g., the current time) by one cycle to the disturbance estimator 2. That is to say, the delay element 7 outputs data that was acquired about the first manipulative variable at the time earlier by one sampling cycle to the disturbance estimator 2. In the first variation, the disturbance estimator 2 estimates, based on the first manipulative variable and the controlled variable, the amount of disturbance corresponding to the data acquired one cycle before and outputs the result of estimation as the disturbance information to the model predictive controller 3. That is to say, in the first variation, the disturbance estimator 2 compares the controlled variable for the current time with the data that was acquired about the first manipulative variable at the time earlier by one sampling cycle than the current time to estimate the amount of disturbance and output an estimation signal, including the amount of disturbance thus estimated, to the model predictive controller 3 and the corrector 5.

The data that was acquired about the first manipulative variable one sampling cycle before is used for the following reason. Specifically, even though the model predictive controller 3 requires the amount of disturbance d^(k) to calculate the second manipulative variable Umpc(k) at a time t = k, the second manipulative variable Umpc(k) to be used by the disturbance estimator 2 to calculate the amount of disturbance d^(k) has not been output yet and is still not available. Therefore, the disturbance estimator 2 uses the second manipulative variable Umpc(k-1) to calculate the amount of disturbance d^(k). More exactly, the disturbance estimator 2 uses the second manipulative variable Umpc(k-1) to calculate the amount of disturbance d^(k + 1/N) (where i = 0, 1, ...., and N-1 and Tmpc = N·Tdob (where N > 1) is satisfied).

In the first variation, the first sampler 32 of the model predictive controller 3 performs down sampling toward the first operating cycle (sampling cycle Tmpc) on not only the controlled variable but also the amount of disturbance as well. That is to say, the cycle Tdob of an estimation signal including the amount of disturbance which has been output by the disturbance estimator 2 is shorter than the first operating cycle. Thus, the first processor P1 makes the first sampler 32 perform a cycle conversion to convert the cycle of the amount of disturbance into the first operating cycle (i.e., the sampling cycle Tmpc) to perform data sampling.

In the first variation, the model predictive controller 3 defines, using a state space model of the control target Ob1, for example, a state variable with the amount of disturbance (which may also be a variation in the amount of disturbance) set as a state quantity, thereby calculating a second manipulative variable that optimizes (e.g., minimizes) the deviation of the amount of disturbance (i.e., the difference between a preset value and an estimated value).

If the control target Ob1 is supposed to be linear time invariant and the state space model of the control target Ob1 is transformed into a discrete system in a control cycle (e.g., Tdob which is as long as the sampling cycle of the disturbance estimator 2), then the state equation and the output equation will be the following equations (6):

[Mathematical Expression 7]

$$x(k+1) = A_d x(k) + B_d u(k)$$
$$y(k) = C_d x(k) \qquad\qquad (6)$$

Note that the input u, the output y, and the state variable x are supposed to be as follows:

[Mathematical Expression 8]

$$u \in R^m$$
$$y \in R^l$$
$$x \in R^n \qquad\qquad (7)$$

The state equation of an extension system in a situation where the state variable x - (k) = [x^(k)d^(k)]T is redefined using the amount of disturbance d^(k) estimated as the state quantity as well is the following equation (8). The following equation (8) has a full-order observer form and allows the original state variable x to be estimated simultaneously. Thus, x is expressed as x^.

[Mathematical Expression 9]

$$\begin{pmatrix} \hat{x}(k+1) \\ \hat{d}(k+1) \end{pmatrix} = \begin{pmatrix} A_d & -B_d \\ 0 & 1 \end{pmatrix} \begin{pmatrix} \hat{x}(k) \\ \hat{d}(k) \end{pmatrix} + \begin{pmatrix} B_d \\ 0 \end{pmatrix} u(k) + \begin{pmatrix} L_1 \\ L_2 \end{pmatrix} \left( y(k) - \hat{y}(k) \right) = \bar{A}_d \begin{pmatrix} \hat{x}(k) \\ \hat{d}(k) \end{pmatrix} + \bar{B}_d\, u(k) +$$

$$\begin{pmatrix} L_1 \\ L_2 \end{pmatrix} \left( y(k) - \hat{y}(k) \right)$$

$$\hat{y}(k) = (C_d \quad 0) \begin{pmatrix} \hat{x}(k) \\ \hat{d}(k) \end{pmatrix} \qquad\qquad \cdot\cdot\cdot(8)$$

The control output Z(k) predicted through a time which is later than a time k by Hp steps is expressed by the following equation (9), where z(k) = x - (k) is supposed to be satisfied. Alternatively, z(k) may also be y^(k) or a constant × x^ (k).

[Mathematical Expression 10]

$$Z(k) = \begin{pmatrix} z(k+1|k) \\ \vdots \\ z\big(k+H_p|k\big) \end{pmatrix} = \Psi \bar{x}(k|k) + \Upsilon u(k-1) + \Theta \Delta U(k)$$

$$(9)$$

The tracking error E(k) is expressed by the following equation (10):
[Mathematical Expression 11]

$$E(k) = T(k) - \psi \bar{x}(k) - \Upsilon u(k-1)$$

$$(10)$$

The respective variables in equation (10) are expressed by the following equations (11) where the reference track at a time k is r(t | k), the variation in control input is Δu^ (k | k) (= u^ (k | k) - u(k - 1), and the control horizon indicating the number of steps that allow the input to change is Hu:

[Mathematical Expression 12]

$$\Delta U(k) = \begin{pmatrix} \Delta \hat{u}(k|k) \\ \vdots \\ \Delta \hat{u}(k+H_u-1|k) \end{pmatrix}$$

$$T = \begin{pmatrix} r(k|k) \\ \vdots \\ r\big(k+H_p|k\big) \end{pmatrix}$$

$$\Psi = \begin{pmatrix} \bar{A}_d \\ \vdots \\ \bar{A}_d^{H_p} \end{pmatrix}$$

$$\Upsilon = \begin{pmatrix} \bar{B}_d \\ \vdots \\ \sum_{i=0}^{H_p-1} \bar{A}_d^i \bar{B}_d \end{pmatrix}$$

$$\Theta = \begin{pmatrix} \bar{B}_d & \cdots & 0 \\ \vdots & \ddots & \vdots \\ \sum_{i=0}^{H_p-1} \bar{A}_d^i \bar{B}_d & \cdots & \sum_{i=0}^{H_p-H_u} \bar{A}_d^i \bar{B}_d \end{pmatrix}$$

An optimization problem for determining the variation in control input by MPC is expressed by the following equation (12):
[Mathematical Expression 13]

$$\min_{\Delta U} V(k), \quad V(k) = \|Z(k) - T(k)\|_Q^2 + \|\Delta U(k)\|_R^2 = [\Delta U^T(k) H \Delta U(k) - G^T \Delta U(k)]$$

$$subject\ to\ \ \Omega \Delta U(k) \le \omega \qquad \qquad \cdots (12)$$

where the respective parameters are expressed by the following equation (13). Q and R are weights of a cost function V(k) and may be set freely.
[Mathematical Expression 14]

[0127]   [Mathematical Expression 14]

$$Q = diag(Q(k) \quad Q(k+1) \quad \cdots \quad Q(k+H_p))$$
$$R = diag(R(k) \quad R(k+1) \quad \cdots \quad Q(k+H_u-1))$$
$$G = 2\Theta^T QE(k), \quad H = \Theta^T Q\Theta + R$$

$$(13)$$

[0112]   In the example described above, the amount of disturbance (or the variation in the amount of disturbance) is supposed to be the state quantity. Alternatively, the amount of disturbance (or the variation in the amount of disturbance) may also be used only as a constraint on the output at the time of MPC calculations. The constraint may be calculated with respect to the state quantity x, the second manipulative variable Umpc, and the variation $\Delta$Umpc in the second manipulative variable as expressed by the following inequalities (14) representing the state quantity constraint x(k+j), the control input constraint u(k+j), and the variation in control input constraint $\Delta$u(k+j).
[Mathematical Expression 15]

[0129]   [Mathematical Expression 15]

$$x_{min} \leq x(k+j) \leq x_{Max} \qquad j = 0, \cdots, H_p$$
$$u_{min} \leq u(k+j) \leq u_{Max} \qquad j = 0, \cdots, H_u$$
$$\Delta u_{min} \leq \Delta u(k+j) \leq \Delta u_{Max} \qquad j = 0, \cdots, H_u$$

$$(14)$$

In the first variation, the model predictive controller 3 is provided with the function of obtaining $\Delta$U(k) that minimizes the cost function V(k) under the constrained condition and outputting the first value $\Delta$u^(k | k) thereof. Nevertheless, d^(k) is subtracted by the modifier 4, and therefore, Umpc(k) is preferably output as Umpc(k) = $\Delta$u^(k | k) + d^k from the model predictive controller 3.
In the first variation, the model predictive controller 3 obtains $\Delta$U(k) by making optimization calculation of

[0132]   [Mathematical Expression 16]

$$\|Z(k) - T(k)\|_Q^2$$

that includes a disturbance deviation with respect to the state quantity x- including the amount of disturbance estimated. As a result, a second manipulative variable that would achieve a disturbance suppression effect is obtained. Starting from this, the modifier 4 modifies, at a time k +i/N, the second manipulative variable based on the amount of disturbance that has been corrected by the corrector 5 to satisfy the constrained condition imposed on the control target Ob1, thereby obtaining the first manipulative variable.
As can be seen, according to the first variation, the amount of disturbance is used for the MPC to be performed by the model predictive controller 3. That is why calculating the second manipulative variable obtained by the MPC with the amount of disturbance taken into account in a situation where there is so significant a variation in disturbance between the time k and the time k+1 that causes a decline in the estimation accuracy of the disturbance estimator 2 allows the average disturbance error during the period to be further reduced. Consequently, this allows for providing a control system 1 with an even higher degree of robustness against disturbances.

(5-2) Second variation

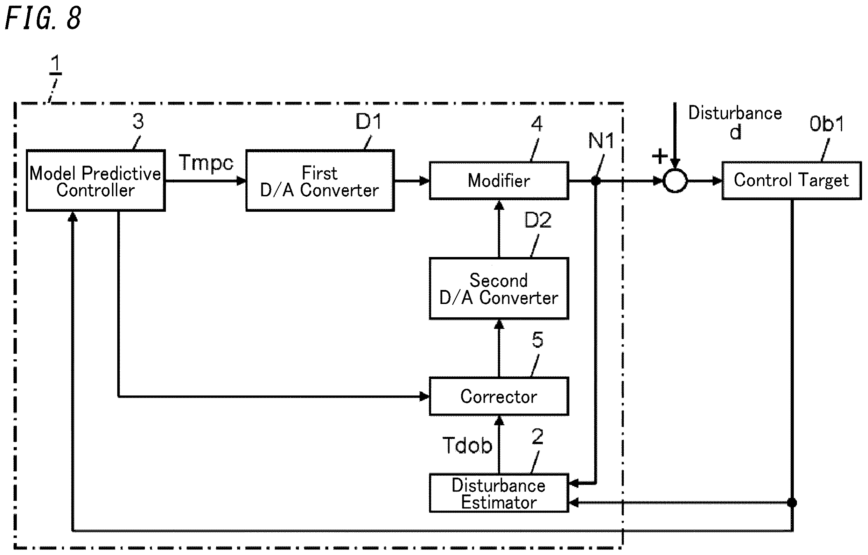

Next, a control system 1 according to a second variation will be described with reference to FIG. 8. In the following description, any constituent element of the control system 1 according to the second variation, having substantially the same function as a counterpart of the control system 1 according to the embodiment described above, will be designated by the same reference numeral as that counterpart's, and a detailed description thereof will be omitted herein.
The control system 1 according to the second variation includes a first D/A converter D1 and a second D/A converter D2 instead of the up-sampler Up1 and the D/A converter 6 in the control system 1 according to the exemplary embodiment described above, which is a difference from the control system 1 according to the exemplary embodiment described above. That is to say, the control system 1 according to the second variation performs D/A conversion at a stage preceding the modifier 4, which is a difference from the control system 1 according to the exemplary embodiment described above.

The control system 1 according to the second variation includes the first D/A converter D1 and the second D/A converter D2 as described above. The first D/A converter D1 is provided between the model predictive controller 3 and the modifier 4. The second D/A converter D2 is provided between the corrector 5 and the modifier 4.

The control signal output by the model predictive controller 3 and the estimation signal output by the disturbance estimator 2 are digital signals. The first D/A converter D1 converts the control signal into an analog signal and outputs the analog signal to the modifier 4. The second D/A converter D2 converts the estimation signal into an analog signal and outputs the analog signal to the modifier 4. Note that the first D/A converter D1, as well as the up-sampler Up1 of the control system 1 according to the exemplary embodiment described above, preferably has an up-sampling function.

In the control system 1 according to the second variation, the modifier 4 modifies the analog signal including the second manipulative variable based on the analog signal including the amount of disturbance that has been corrected. This makes it easier for the modifier 4 to synchronize the timing of calculation to modify the manipulative variable.

(5-3) Third variation

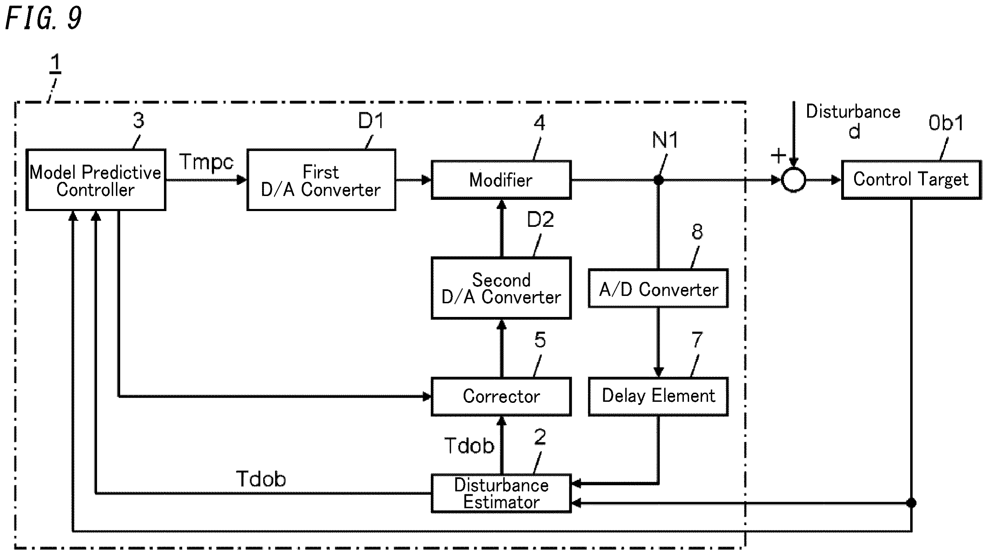

Next, a control system 1 according to a third variation will be described with reference to FIG. 9. In the following description, any constituent element of the control system 1 according to the third variation, having substantially the same function as a counterpart of the control system 1 according to the embodiment, first variation, or second variation described above, will be designated by the same reference numeral as that counterpart's, and a detailed description thereof will be omitted herein.

The control system 1 according to this variation, as well as the control system 1 according to the second variation, also includes the first D/A converter D1 and the second D/A converter D2. In addition, the control system 1 according to the third variation has the amount of disturbance that has been estimated by the disturbance estimator 2 supplied to the model predictive controller 3 as well and also includes the delay element 7 as in the control system 1 according to the first variation. Nevertheless, the control system 1 according to the third variation further includes an A/D converter 8 unlike the control system 1 according to the exemplary embodiment, first variation, or the second variation described above.

In short, according to the third variation, the output signal including the first manipulative variable which is provided by the modifier 4 is an analog signal. To input the first manipulative variable to the disturbance estimator 2 via the delay element 7, the analog signal needs to be converted into a digital signal. For that purpose, the A/D converter 8 is provided.

The A/D converter 8 is provided between the connection node N1 (node) and the delay element 7. The A/D converter 8 performs data sampling on the first manipulative variable of the output signal in a particular operating cycle (e.g., Tdob which is as long as the sampling period of the disturbance estimator 2) to convert the output signal into a digital signal and output the digital signal thus converted. The delay element 7 is connected to the A/D converter 8 and outputs data, which was acquired at a point in time earlier than a certain point in time (e.g., the current time) by one cycle, about the first manipulative variable of the digital signal output by the A/D converter 8 to the disturbance estimator 2. The disturbance estimator 2 estimates, based on the first manipulative variable and the controlled variable, the amount of disturbance corresponding to the data that was acquired one cycle before and outputs the result of estimation as disturbance information to the model predictive controller 3.

The control system 1 according to the third variation makes, even if the output signal provided by the modifier 4 is an analog signal, it easier for the model predictive controller 3 to use the amount of disturbance that has been estimated by the disturbance estimator 2, thus further improving the accuracy of the second manipulative variable eventually.

(Recapitulation)

The exemplary embodiment and its variations described above are specific implementations of the following aspects of the present disclosure.

A control system (1) according to a first aspect provides an output signal, including a first manipulative variable, to a control target (Ob1). The control system (1) includes a disturbance estimator (2), a model predictive controller (3), and a modifier (4). The disturbance estimator (2) estimates, based on the first manipulative variable and a controlled variable, a disturbance generated by, or applied to, the control target (Ob1) and outputs, as a result of estimation, an estimation signal including an amount of disturbance. The control target (Ob1) outputs a controlled variable signal including the controlled variable according to the first manipulative variable. The model predictive controller (3) calculates a second manipulative variable based on the controlled variable to output a control signal including the second manipulative variable. The modifier

(4) modifies the second manipulative variable by reference to modification information based on the amount of disturbance and thereby provides the output signal including the first manipulative variable as the second manipulative variable thus modified. The model predictive controller (3) includes one or more first processors (P1) that perform processing on model predictive control. The disturbance estimator (2) includes one or more second processors (P2) that perform processing on disturbance estimation. The model predictive controller (3) outputs the control signal in a first output cycle. The disturbance estimator (2) outputs the estimation signal in a second output cycle. The modifier (4) provides the output signal in a third output cycle. The second output cycle and the third output cycle are both shorter than the first output cycle.

According to this aspect, the model predictive control function and the disturbance estimation function are implemented by different processors, and the second output cycle of the disturbance estimator (2) and the third output cycle of the modifier (4) are both shorter than the first output cycle of the model predictive controller (3). That is to say, the second and third output cycles are set independently of the first output cycle of the model predictive controller (3). Consequently, the control system (1) achieves the advantage of contributing to improving the practicality in terms of the model predictive control function and the disturbance suppression function.

A control system (1) according to a second aspect, which may be implemented in conjunction with the first aspect, further includes a corrector (5) that corrects the amount of disturbance that has been estimated by the disturbance estimator (2) to satisfy a predetermined constrained condition. The modifier (4) modifies the second manipulative variable using, as the modification information, a result of correction made by the corrector (5).

According to this aspect, the amount of disturbance that has been estimated by the disturbance estimator (2) is corrected to satisfy the predetermined constrained condition, thus further improving the practicality in terms of the model predictive control function and the disturbance suppression function.

In a control system (1) according to a third aspect, which may be implemented in conjunction with the second aspect, the predetermined constrained condition is that a value regarding the first manipulative variable based on the amount of disturbance that has been corrected fall within a predetermined constraint range having a lower limit value and an upper limit value.

This aspect may reduce the chances of a first manipulative variable exceeding either the constraint imposed on a device (i.e., the control target Ob1) or the constraint imposed on a controller for the device (in terms of maximum voltage, maximum current, or tolerable torque for a motor) being sent to the device to produce a saturated state (e.g., to produce saturated torque).

In a control system (1) according to a fourth aspect, which may be implemented in conjunction with any one of the first to third aspects, the second output cycle is as long as the third output cycle.

According to this aspect, the third output cycle of the modifier (4) is matched to the second output cycle of the disturbance estimator (2), thereby providing more accurate disturbance suppression function.

In a control system (1) according to a fifth aspect, which may be implemented in conjunction with any one of the first to fourth aspects, the model predictive controller (3) operates in a first operating cycle to perform the processing on the model predictive control. The disturbance estimator (2) operates in a second operating cycle to perform the processing on the disturbance estimation. The first output cycle is equal to or longer than the first operating cycle. The second output cycle is equal to or longer than the second operating cycle.

This aspect makes it easier to provide more accurate disturbance suppression function.

In a control system (1) according to a sixth aspect, which may be implemented in conjunction with the fifth aspect, the one or more first processors (P1) include a first sampler (32) and an arithmetic unit (31). The first sampler (32) performs down sampling toward the first operating cycle with respect to the controlled variable. The arithmetic unit (31) performs arithmetic processing on the model predictive control by operating in the first operating cycle with respect to a result of sampling performed by the first sampler (32). The one or more second processors (P2) include a second sampler (22) that performs data sampling on the controlled variable using the second operating cycle as a sampling cycle.

This aspect makes it easier to provide more accurate disturbance suppression function.

In a control system (1) according to a seventh aspect, which may be implemented in conjunction with the fifth or sixth aspect, the one or more first processors (P1) include a timer (33) that operates in a constant cycle and an arithmetic unit (31). The arithmetic unit (31) performs arithmetic processing on the model predictive control by operating in the first operating cycle based on the constant cycle of the timer (33). The control system (1) satisfies $Tmpc > Tdob \geq Ts$, where Ts is the constant cycle, Tmpc is the first operating cycle, and Tdob is the second operating cycle.

This aspect makes it easier to provide more accurate disturbance suppression function.

In a control system (1) according to an eighth aspect, which may be implemented in conjunction with any one of the first to seventh aspects, the output signal provided by the modifier (4) is a digital signal. The control system (1) further includes an up-sampler (Up1) and a D/A converter (6). The up-sampler (Up1) performs a cycle conversion to convert the control signal output in the first output cycle by the model predictive controller (3) into a signal having the second output cycle and output the signal having the second output cycle to the modifier (4). The D/A converter (6) converts the output signal provided by the modifier (4) into an analog signal and outputs the analog signal to the control target (Ob1).

This aspect makes it easier to provide more accurate disturbance suppression function.

In a control system (1) according to a ninth aspect, which may be implemented in conjunction with any one of the first to eighth aspects, each of the control signal output by the model predictive controller (3) and the estimation signal output by the disturbance estimator (2) is a digital signal. The control system (1) further includes: a first D/A converter (D1) that converts the control signal into an analog signal and outputs the analog signal to the modifier (4); and a second D/A converter (D2) that converts the estimation signal into an analog signal and outputs the analog signal to the modifier (4).

This aspect makes it easier to provide a more accurate disturbance suppression function.

In a control system (1) according to a tenth aspect, which may be implemented in conjunction with any one of the first to ninth aspects, the model predictive controller (3) calculates the second manipulative variable based on the controlled variable and disturbance information about the amount of disturbance that has been estimated by the disturbance estimator (2) to output the control signal including the second manipulative variable.

According to this aspect, the amount of disturbance estimated by the disturbance estimator (2) is also applied to the model predictive controller (3), thus improving the accuracy of the second manipulative variable.

A control system (1) according to an eleventh aspect, which may be implemented in conjunction with the tenth aspect, further includes a delay element (7) that outputs data about the first manipulative variable included in the output signal to the disturbance estimator (2). The data was acquired one cycle before a certain point in time. The disturbance estimator (2) estimates, based on the first manipulative variable and the controlled variable, the amount of disturbance corresponding to the data acquired one cycle before to output a result of estimation as the disturbance information to the model predictive controller (3).

This aspect makes it easier for the model predictive controller (3) to use the amount of disturbance estimated by the disturbance estimator (2), thus further improving the accuracy of the second manipulative variable eventually.

In a control system (1) according to a twelfth aspect, which may be implemented in conjunction with the tenth or eleventh aspect, the disturbance estimator (2) includes one or more second processors (P2) that operate in a particular operating cycle to perform the processing on the disturbance estimation. The output signal provided by the modifier (4) is an analog signal. The control system (1) further includes an A/D converter (8) and a delay element (7). The A/D converter (8) performs data sampling in the particular operating cycle on the first manipulative variable included in the output signal to convert the output signal into a digital signal and output the digital signal. The delay element (7) is connected to the A/D converter (8) and outputs, to the disturbance estimator (2), data about the first manipulative variable included in the digital signal output by the A/D converter (8). The data was acquired one cycle before a certain point in time. The disturbance estimator (2) estimates, based on the first manipulative variable and the controlled variable, the amount of disturbance corresponding to the data acquired one cycle before to output a result of estimation as the disturbance information to the model predictive controller (3).

This configuration makes, even if the output signal provided by the modifier (4) is an analog signal, it easier for the model predictive controller (3) to use the amount of disturbance estimated by the disturbance estimator (2), thus further improving the accuracy of the second manipulative variable eventually.

In a control system (1) according to a thirteenth aspect, which may be implemented in conjunction with any one of the first to twelfth aspects, the disturbance estimator (2) is implemented as a disturbance observer for calculating the amount of disturbance based on the first manipulative variable and the controlled variable.

This aspect makes it easier to provide more accurate disturbance suppression function.

In a control system (1) according to a fourteenth aspect, which may be implemented in conjunction with any one of the first to thirteenth aspects, the one or more first processors (P1) are installed in a first device (such as a PLC 100). The one or more second processors (P2) are installed in a second device (such as a servo driver 200). The second device is arranged to make a communication distance between the second device and the control target (Ob1) shorter than a communication distance between the first device and the control target (Ob1).

This aspect allows the communication delay caused by the second device to be reduced, thus making it easier to provide more accurate disturbance suppression function.

A control method according to a fifteenth aspect is a method for controlling a control system (1) that provides an output signal including a first manipulative variable to a control target (Ob1). The control method includes a disturbance estimation step, a model predictive control step, and a modification step. The disturbance estimation step includes estimating, based on the first manipulative variable and a controlled variable, a disturbance generated by, or applied to, the control target (Ob1) and outputting, as a result of estimation, an estimation signal including an amount of disturbance. The control target (Ob1) outputs a controlled variable signal including the controlled variable according to the first manipulative variable. The model predictive control step includes calculating a second manipulative variable based on the controlled variable to output a control signal including the second manipulative variable. The modification step includes modifying the second manipulative variable by reference to modification information based on the amount of disturbance and thereby providing the output signal including the first manipulative variable as the second manipulative variable thus modified. The model predictive control step is performed by one or more first processors (P1) that perform processing on model predictive control. The disturbance estimation step is performed by one or more second processors (P2) that perform processing on disturbance estimation. The model predictive control step includes outputting the control signal in a first output cycle. The disturbance estimation step includes outputting the estimation signal in a second output cycle. The modification step includes providing the output signal in a third output cycle. The second output cycle and the third output cycle are both shorter than the first output cycle.

This aspect may provide a control method that contributes to improving the practicality in terms of the model predictive control function and the disturbance suppression function.

A program according to a sixteenth aspect is designed to cause one or more processors to perform the control method according to the fifteenth aspect.

This aspect may provide a function that contributes to improving the practicality in terms of the model predictive control function and the disturbance suppression function.

Note that the constituent elements according to the second to fourteenth aspects are not essential constituent elements for the control system (1) but may be omitted as appropriate.

**Industrial Applicability**

A control system, control method, and program according to the present disclosure may contribute to improving the practicality in terms of the model predictive control function and the disturbance suppression function, thus allowing for further improving the practicality of control of motors and plants, for example. Therefore, the control system, control method, and program according to the present disclosure are applicable to various fields on an industrial basis.

**Reference Signs List**

| | |
|---|---|
| 1 | Control System |
| 2 | Disturbance Estimator |
| 22 | Second Sampler |
| 3 | Model Predictive Controller |
| 31 | Arithmetic Unit |
| 32 | First Sampler |
| 33 | Timer |
| 4 | Modifier |
| 5 | Corrector |
| 6 | D/A Converter |
| 7 | Delay Element |
| 8 | A/D Converter |
| D1 | First D/A Converter |
| D2 | Second D/A Converter |
| Ob1 | Control Target |
| P1 | First Processor |
| P2 | Second Processor |
| Up1 | Up-Sampler |

**Claims**

1. A control system configured to provide an output signal including a first manipulative variable to a control target, the control system comprising:

a disturbance estimator configured to estimate, based on the first manipulative variable and a controlled variable, a disturbance generated by, or applied to, the control target and output, as a result of estimation, an estimation signal including an amount of disturbance, the control target outputting a controlled variable signal including the controlled variable according to the first manipulative variable;
a model predictive controller configured to calculate a second manipulative variable based on the controlled variable to output a control signal including the second manipulative variable; and
a modifier configured to modify the second manipulative variable by reference to modification information based on the amount of disturbance and thereby provide the output signal including the first manipulative variable as the second manipulative variable thus modified,
the model predictive controller including one or more first processors configured to perform processing on model predictive control,

the disturbance estimator including one or more second processors configured to perform processing on disturbance estimation,
the model predictive controller being configured to output the control signal in a first output cycle,
the disturbance estimator being configured to output the estimation signal in a second output cycle,
the modifier being configured to provide the output signal in a third output cycle, and
the second output cycle and the third output cycle being both shorter than the first output cycle.

2. The control system of claim 1, further comprising a corrector configured to correct the amount of disturbance that has been estimated by the disturbance estimator to satisfy a predetermined constrained condition, wherein
the modifier is configured to modify the second manipulative variable using, as the modification information, a result of correction made by the corrector.

3. The control system of claim 2, wherein
the predetermined constrained condition is that a value regarding the first manipulative variable based on the amount of disturbance that has been corrected fall within a predetermined constraint range having a lower limit value and an upper limit value.

4. The control system of any one of claims 1 to 3, wherein
the second output cycle is as long as the third output cycle.

5. The control system of any one of claims 1 to 4, wherein

the model predictive controller is configured to operate in a first operating cycle to perform the processing on the model predictive control,
the disturbance estimator is configured to operate in a second operating cycle to perform the processing on the disturbance estimation,
the first output cycle is equal to or longer than the first operating cycle, and
the second output cycle is equal to or longer than the second operating cycle.

6. The control system of claim 5, wherein
the one or more first processors include:

a first sampler configured to perform down sampling toward the first operating cycle with respect to the controlled variable; and
an arithmetic unit configured to perform arithmetic processing on the model predictive control by operating in the first operating cycle with respect to a result of sampling performed by the first sampler, and
the one or more second processors include a second sampler configured to perform data sampling on the controlled variable using the second operating cycle as a sampling cycle.

7. The control system of claim 5 or 6, wherein
the one or more first processors include:

a timer configured to operate in a constant cycle; and
an arithmetic unit configured to perform arithmetic processing on the model predictive control by operating in the first operating cycle based on the constant cycle of the timer, and
the control system satisfies $Tmpc > Tdob \geq Ts$, where $Ts$ is the constant cycle, $Tmpc$ is the first operating cycle, and $Tdob$ is the second operating cycle.

8. The control system of any one of claims 1 to 7, wherein

the output signal provided by the modifier is a digital signal, and
the control system further comprises:

an up-sampler configured to perform a cycle conversion to convert the control signal output in the first output cycle by the model predictive controller into a signal having the second output cycle and output the signal having the second output cycle to the modifier; and
a D/A converter configured to convert the output signal provided by the modifier into an analog signal and output the analog signal to the control target.

9.  The control system of any one of claims 1 to 8, wherein

    each of the control signal output by the model predictive controller and the estimation signal output by the disturbance estimator is a digital signal, and
    the control system further comprises:

    a first D/A converter configured to convert the control signal into an analog signal and output the analog signal to the modifier; and
    a second D/A converter configured to convert the estimation signal into an analog signal and output the analog signal to the modifier.

10. The control system of any one of claims 1 to 9, wherein
    the model predictive controller is configured to calculate the second manipulative variable based on the controlled variable and disturbance information about the amount of disturbance that has been estimated by the disturbance estimator to output the control signal including the second manipulative variable.

11. The control system of claim 10, further comprising a delay element configured to output data about the first manipulative variable included in the output signal to the disturbance estimator, the data having been acquired one cycle before a certain point in time, wherein
    the disturbance estimator is configured to estimate, based on the first manipulative variable and the controlled variable, the amount of disturbance corresponding to the data acquired one cycle before to output a result of estimation as the disturbance information to the model predictive controller.

12. The control system of claim 10 or 11, wherein

    the disturbance estimator includes one or more second processors configured to operate in a particular operating cycle to perform the processing on the disturbance estimation,
    the output signal provided by the modifier is an analog signal,
    the control system further comprises:

    an A/D converter configured to perform data sampling in the particular operating cycle on the first manipulative variable included in the output signal to convert the output signal into a digital signal and output the digital signal; and
    a delay element connected to the A/D converter and configured to output, to the disturbance estimator, data about the first manipulative variable included in the digital signal output by the A/D converter, the data having been acquired one cycle before a certain point in time, and
    the disturbance estimator is configured to estimate, based on the first manipulative variable and the controlled variable, the amount of disturbance corresponding to the data acquired one cycle before to output a result of estimation as the disturbance information to the model predictive controller.

13. The control system of any one of claims 1 to 12, wherein
    the disturbance estimator is implemented as a disturbance observer configured to calculate the amount of disturbance based on the first manipulative variable and the controlled variable.

14. The control system of any one of claims 1 to 13, wherein

    the one or more first processors are installed in a first device,
    the one or more second processors are installed in a second device, and
    the second device is arranged to make a communication distance between the second device and the control target shorter than a communication distance between the first device and the control target.

15. A control method for controlling a control system, the control system being configured to provide an output signal including a first manipulative variable to a control target, the control method comprising:

    a disturbance estimation step including estimating, based on the first manipulative variable and a controlled variable, a disturbance generated by, or applied to, the control target and output, as a result of estimation, an estimation signal including an amount of disturbance, the control target outputting a controlled variable signal including a controlled variable according to the first manipulative variable;

a model predictive control step including calculating a second manipulative variable based on the controlled variable to output a control signal including the second manipulative variable; and

a modification step including modifying the second manipulative variable by reference to modification information based on the amount of disturbance and thereby providing the output signal including the first manipulative variable as the second manipulative variable thus modified,

the model predictive control step being performed by one or more first processors configured to perform processing on model predictive control,

the disturbance estimation step being performed by one or more second processors configured to perform processing on disturbance estimation,

the model predictive control step including outputting the control signal in a first output cycle,

the disturbance estimation step including outputting the estimation signal in a second output cycle,

the modification step including providing the output signal in a third output cycle, and

the second output cycle and the third output cycle being both shorter than the first output cycle.

16. A program designed to cause one or more processors to perform the control method of claim 15.

FIG. 1

*FIG. 2 A*

| Model Predictive Controller | — 3 |
| --- | --- |

P1

| Arithmetic Unit | — 31 |
| First Sampler | — 32 |
| Timer | — 33 |

| Storage Device | — 34 |

*FIG. 2 B*

Disturbance Estimator — 2

P2 —— Arithmetic Unit — 21

Second Sampler — 22

*FIG. 3 A*

*FIG. 3B*

## FIG. 4

```
                    ┌──────────┐
                    │  START   │
                    └────┬─────┘
                         ↓                    ST1
              ┌─────────────────────────┐
              │   Set manipulative      │
              │ variable for current time│
              └───────────┬─────────────┘
                          ↓               ST2
              ┌─────────────────────────┐
              │       t=t+Tdob          │
              └───────────┬─────────────┘
                          ↓
                        ST3        No
                   ◇ t<Tmpc? ◇─────────────┐
                                            ↓            ST4
                        Yes         ┌──────────────────┐
                                    │  Perform model   │
                                    │predictive control│
                          ST5       └────────┬─────────┘
              ┌─────────────────────┐◄───────┘
              │ Perform disturbance │
              │    estimation       │
              └──────────┬──────────┘
                   ST6   ↓
              ┌─────────────────────┐
              │   Correct amount    │
              │   of disturbance    │
              └──────────┬──────────┘
                   ST7   ↓
              ┌─────────────────────┐
              │ Correct manipulative│
              │     variable        │
              └──────────┬──────────┘
              ST8        ↓
         No     ◇  t≥Tmpc? ◇
                          ↓ Yes
              ST9
         No    ◇  Reached     ◇
               ◇end point of target◇
               ◇   track?     ◇
                          ↓ Yes
                    ┌──────────┐
                    │   END    │
                    └──────────┘
```

*FIG. 5*

PLC — 100(1,3)

Processing Unit — 101

Servo Driver — 200(1,2,4,5,6,Up1)

Processing Unit — 201

Motor — 300

Load Device — 400

FIG. 6

```
┌────────────────────────────┐
│      Servo Driver          │──── 200(1)
│  ┌──────────────────────┐  │
│  │   Processing Unit    │  │──── 201
│  └──────────────────────┘  │
└────────────────────────────┘
        │││
┌──────────────┐   ┌──────────────────┐
│    Motor     │───│   Load Device    │
└──────────────┘   └──────────────────┘
       300               400
```

FIG. 7

FIG. 8

FIG. 9

## INTERNATIONAL SEARCH REPORT

| International application No. |
|---|
| **PCT/JP2023/046011** |

| A. | CLASSIFICATION OF SUBJECT MATTER |
|---|---|

*G05B 13/04*(2006.01)i; *G05B 11/36*(2006.01)i; *G05B 13/02*(2006.01)i; *H02P 29/00*(2016.01)i
FI:    G05B13/04; G05B13/02 C; G05B11/36 B; H02P29/00

According to International Patent Classification (IPC) or to both national classification and IPC

| B. | FIELDS SEARCHED |
|---|---|

Minimum documentation searched (classification system followed by classification symbols)

G05B13/04; G05B11/36; G05B13/02; H02P29/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2010-204784 A (FUJI ELECTRIC SYSTEMS CO., LTD) 16 September 2010 (2010-09-16) <br> paragraphs [0028]-[0030], fig. 1 | 1-16 |
| A | JP 2009-181392 A (OMRON CORPORATION) 13 August 2009 (2009-08-13) <br> paragraphs [0046]-[0055], fig. 1 | 1-16 |
| A | JP 2020-21411 A (FUJI ELECTRIC CO., LTD.) 06 February 2020 (2020-02-06) <br> paragraphs [0019]-[0028], fig. 1 | 1-16 |
| P, A | JP 2023-25646 A (NIPPON STEEL CORPORATION) 22 February 2023 (2023-02-22) <br> paragraphs [0023]-[0035], fig. 3 | 1-16 |

☐ Further documents are listed in the continuation of Box C.    ☑ See patent family annex.

| | |
|---|---|
| \* Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **05 February 2024** | **20 February 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT
### Information on patent family members

International application No.

**PCT/JP2023/046011**

| Patent document cited in search report | | | Publication date (day/month/year) | Patent family member(s) | Publication date (day/month/year) |
|---|---|---|---|---|---|
| JP | 2010-204784 | A | 16 September 2010 | (Family: none) | |
| JP | 2009-181392 | A | 13 August 2009 | (Family: none) | |
| JP | 2020-21411 | A | 06 February 2020 | (Family: none) | |
| JP | 2023-25646 | A | 22 February 2023 | (Family: none) | |

Form PCT/ISA/210 (patent family annex) (July 2022)

**EP 4 664 210 A1**

**Patent documents cited in the description**

- JP 2010204784 A